# EUROPEAN PATENT SPECIFICATION

(11) **EP 3 342 991 B1**
(45) Date of publication and mention of the grant of the patent: **14.10.2020**
(21) Application number: 16207606.1
(22) Date of filing: 30.12.2016
(51) Int. Cl.: F01D 25/26, F01D 11/24

(54) **BAFFLES FOR COOLING IN A GAS TURBINE**
PRALLPLATTEN FÜR KÜHLUNG IN EINER GASTURBINE
DÉFLECTEURS POUR LE REFROIDISSEMENT DANS UNE TURBINE À GAZ

(43) Date of publication of application: 04.07.2018
(73) Proprietor: Ansaldo Energia IP UK Limited, London W1G 9DQ (GB)
(72) Inventor: ABATE, Pancrazio, 5430 WETTINGEN (CH); OLMES, Sven, 5210 WINDISCH (CH); CATALDI, Giovanni, 8004 ZURICH (CH); WIEDEMANN, Nikolas, 5442 FISLIBACH (CH)
(74) Representative: Bernotti, Andrea

(56) References cited:
- EP-A1- 2 907 978
- EP-A1- 2 944 768
- EP-A1- 3 128 133
- US-A- 5 980 201
- US-A1- 2004 228 723
- US-A1- 2007 065 274
- US-A1- 2014 013 767

## Description

### TECHNICAL FIELD

The present invention relates to a gas turbine with secondary air system.

### BACKGROUND

As it is known, in a gas turbine hot gas that flows through expansion or turbine sections may reach temperatures even higher than 1500 °C. Cooling of turbine regions which are subject to high temperature, such as turbine vanes and blades and stator heat shields, is often required and is usually achieved by directing a flow of relatively cold air from a compressor section toward the turbine section through a so-called secondary air system (SAS).

In a secondary air system of a gas turbine, air is typically transferred from compressor bleeds to the turbine sections through external pipes, which are limited in number (e.g. two or four), essentially for reasons of cost and space. Cooling air from external piping is then fed to one or more annular cavities surrounding the turbine rotor and defined between an inner casing and an outer casing of the gas turbine. More specifically, in some cases the annular cavities may be formed by a Turbine Vane Carrier (TVC) and a Turbine Housing (TH).

Cooling air leaving the feeding pipes is directed radially inward and directly impinges on the inner casing at respective locations. This leads to a significant flow nonuniformity and uneven temperature distribution in a circumferential direction around the inner casing, because heat transfer coefficient is much higher at direct impingement regions and drops away therefrom. In turn, on account of the temperature distribution, different parts of the inner casing are subjected to different thermal expansion in use and the inner casing may deform in an oval manner. Deformation of the inner casing requires wider clearances between mutually facing static and rotating parts to prevent contact during operation. Wider clearances, however, may result in a loss of efficiency because a greater fraction of the hot gas flow may leak through clearances and does not interact with streamlined portions of turbine vanes and blades.

EP2907978 discloses a turbine frame assembly including an outer cavity and an inner cavity, with the outer cavity including openings configured to communicate cooling air to the turbine case. Baffles within the outer cavity receive the cooling air and include a plurality of side openings for directing cooling airflow into the outer cavity and preventing direct impingement of cooling air onto the inner wall of the outer cavity.

US5980201 A discloses a device for blowing gases for regulating clearances in a gas turbine engine to render uniform a rate and temperature of the gas flow.

### SUMMARY OF THE INVENTION

It is an aim of the present invention to provide a gas turbine which allows overcoming or at least attenuating the limitations described.

According to the present invention, there is provided a gas turbine as disclosed in claim 1.

Reducing or completely avoiding direct impingement of cooling fluid on the inner casing leads to more uniform distribution of temperature in a circumferential direction along the inner casing. In fact, baffles deflect the cooling fluid flow and may either create turbulence or a rotary flow around the inner casing. In both cases, irregular heat exchange with the inner casing is avoided and temperature distribution is made more uniform. Thermal expansion is thus approximately the same in all sections of the inner casing and deformation of the latter is prevented.

Also velocity and pressure distribution of the cooling fluid flow are made more uniform, thus improving supply of cooling fluid through the inner casing wall to turbine vanes and blades and to the internal surface of the inner casing itself.

According to an embodiment of the invention, each baffle is separated from the inner casing by a free space.

The cooling fluid is steered by the baffle plates by vortices at the edges of the baffles or by deflection and can provide effective cooling action around the whole inner casing, including regions between the baffles and the inner casing.

According to an embodiment of the invention, the annular cavity has a height defined by a radial distance between the outer casing and the inner casing and the baffles are located between 20% and 80% of the height of the annular cavity.

According to an embodiment of the invention, the annular cavity has a first axial length and the baffles have a second axial length which is between 10% and 100% of the first axial length.

According to an embodiment of the invention, the baffles are oriented to form an angle between 90°±45° with a direction of the cooling fluid flow entering the annular cavity through the cooling inlets.

According to an embodiment of the invention, the baffles are arranged symmetrically with respect to the corresponding cooling inlet in the outer casing.

The positioning of the baffles can be thus optimized to make temperature distribution as even as possible along the inner casing.

According to an embodiment of the invention, the baffles are arranged to split respective impinging jets of cooling fluid into flow portions deflected in opposite circumferential directions.

Before reaching the inner casing, the speed of the cooling fluid flow is smoothed by interaction with the baffles and by interaction of flow portion with opposite direction. With respect to an arrangement with no baffles, the cooling fluid flow is thus steered and slowed down before providing its cooling action to the inner casing, especially in regions between the baffles and the inner casing. As a result, the speed of the cooling fluid is more uniform at the surface of the inner casing and the cooling effect is more homogeneous.

According to an embodiment of the invention, the baffles are arranged to deflect the whole cooling fluid flow in a common circumferential direction.

Thus, the cooling fluid flow takes a rotary component. Direct impingement on the inner casing is in any case prevented and velocity conditions are well balanced all around the inner casing.

According to an embodiment of the invention, the baffles are in the form of curved plates having a curvature in a plane perpendicular to the axis and having each a convex surface and a concave surface.

According to an embodiment of the invention, the baffles are oriented such that the cooling fluid flow impinges on the convex surfaces of the baffles.

According to an embodiment of the invention, the baffles are oriented such that the cooling fluid flow impinges on the concave surfaces of the baffles.

According to an embodiment of the invention, the annular cavity is axially delimited by annular walls and the baffles are supported by at least one of the annular walls.

According to an embodiment of the invention, the baffles extend from one of the annular walls to the other of the annular walls and is supported by both the annular walls.

### BRIEF DESCRIPTION OF THE DRAWINGS

The present invention will now be described with reference to the accompanying drawings, which show some non-limitative embodiment thereof, in which:
- Figure 1 is a perspective view of a gas turbine with a secondary air system;
- Figure 2 is a side view, cut along the axial, longitudinal plane II-II of figure 1, of an enlarged detail of the gas turbine of figure 1, in accordance with an embodiment of the present invention;
- Figure 3 is a front sectional view of the gas turbine of figure 1, taken along the plane III-III of figure 2;
- Figure 4 is a front sectional view of a turbine section of a gas turbine in accordance with another embodiment of the present invention;
- Figure 5 is a front sectional view of a turbine section of a gas turbine in accordance with another embodiment of the present invention;
- Figure 6 is a front sectional view of a turbine section of a gas turbine in accordance with another embodiment of the present invention;
- Figure 7 is a front sectional view of a turbine section of a gas turbine in accordance with another embodiment of the present invention;
- Figure 8 is a front sectional view of a turbine section of a gas turbine in accordance with another embodiment of the present invention; and
- Figure 9 is a side view, cut along an axial, longitudinal plane, of a detail of a turbine section of a gas turbine in accordance with an embodiment of the present invention.

### DETAILED DESCRIPTION OF EXEMPLARY EMBODIMENTS

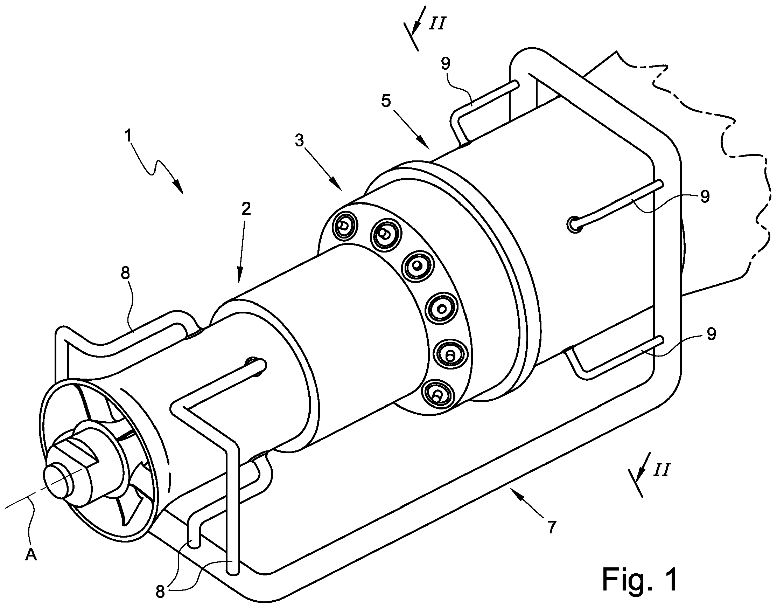

Figure 1 shows a simplified view of a gas turbine assembly, designated as whole with numeral 1. The gas turbine assembly 1 comprises a compressor section 2, a combustor assembly 3, a turbine section 5 and a cooling circuit or secondary air system 7. The compressor section 2 and the turbine section 5 extend along a main axis A.

The compressor section 2 of the gas turbine assembly 1 provides a compressed airflow, which is added with fuel and burned in the combustor assembly 3. A fraction of the airflow processed in the compressor section 2 is directed by the secondary air system 7 to the turbine section 5 for the purpose of cooling and defines a cooling fluid flow F. The secondary air system 7 comprises extraction pipes 8 and supply pipes 9. The extraction pipes 8 are coupled to an intermediate stage of the compressor assembly 2 and receive the cooling fluid flow F, which is then supplied to the turbine section 5 for the purpose of cooling through the supply pipes 9. In the embodiment of figure 1, the secondary air system 7 comprises four extraction pipes 8 and four supply pipes 9. It is however understood that the secondary air system may have different numbers of extracting and/or supply pipes (e.g. two supply pipes), as well as recirculation pipe to recirculate gas from the exhaust of the turbine section 5 as cooling fluid.

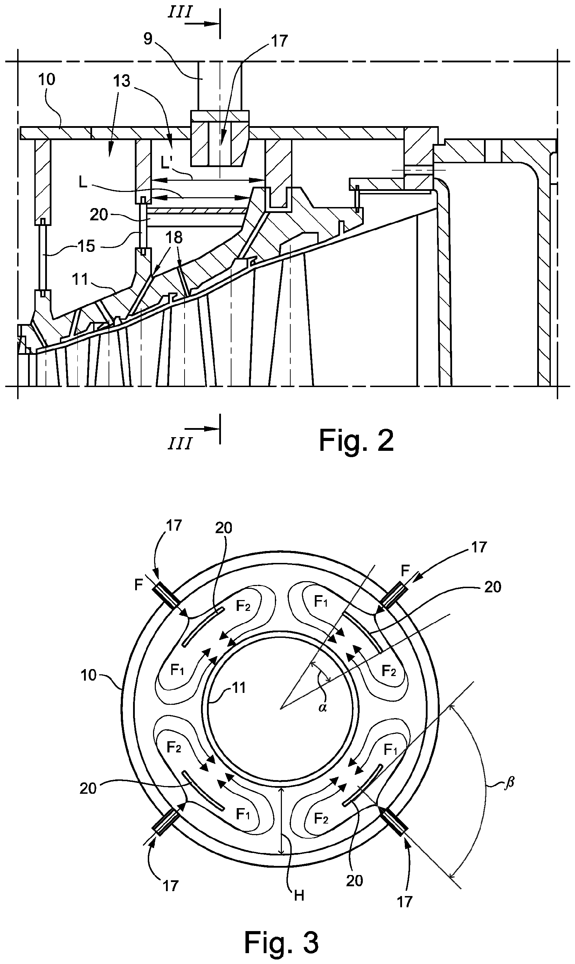

As illustrated in figures 2 and 3, the turbine section 5 comprises an outer casing 10 and an inner casing 11, which in one embodiment may be a turbine casing and a turbine vane carrier, respectively. The outer casing 10 and the inner casing 11 extend around the axis A and delimit annular cavities 13 between one another. More precisely, the annular cavities 13 are delimited by the outer casing 10 outwardly, by the inner casing 11 inwardly and by pairs of annular walls 15 on opposite sides in an axial direction. One of the cavities 13 may be axially delimited on one side by a connection of the outer casing 10 and of the outer casing 11.

The supply pipes 9 of the secondary air system 7 are fluidly coupled with at least one of the annular cavities 13 through respective cooling inlets 17 in the outer casing 10. Thus, the annular cavity 13 forms a cooling plenum and supplies the cooling fluid to inner stator portions of the turbine section (e.g. turbine vanes, not shown, or inner surface of the turbine vane carrier) through cooling passages 18 in the inner casing 11.

Baffles 20 are arranged in the annular cavity 13 between respective cooling inlets 17 and the inner casing 11. In one embodiment, the baffles 20 are in the form of curved plates with a curvature in a plane perpendicular to the axis A and have each a convex surface and a concave surface. The baffles 20 are configured to intercept at least part of the cooling fluid flow F fed through the respective cooling inlets 17 and to prevent the intercepted cooling fluid flow F from directly impinging on the inner casing. "Directly impinging" is herein understood as meaning that the cooling fluid flow F reaches the inner casing 11 from the cooling inlets 17 along a substantially radial direction without interaction with other components between the cooling inlets 17 and the inner casing 11 or at most with interaction with the annular walls 15. According to the embodiments described, therefore, at least for a portion of the cooling fluid flow F there is no direct impingement because of the presence of the baffles 20.

The baffles 20 are arranged in the annular cavity 13 with a free space between the baffles 20 and the inner casing 11. The radial location between the outer casing 10 and the inner casing 11, the size in the circumferential direction and the angle with respect to the direction of the cooling fluid flow F arriving from the respective cooling inlets 17 may be selected for the baffles 20 according to the needs. Examples of suitable ranges may be as follows.

The baffles 20 may be located between 20% and 80% of a height H of the annular cavity 13, the height H of the annular cavity 13 being defined by a radial distance between the outer casing 10 and the inner casing 11.

The baffles 20 extend in a circumferential direction over an angle between 15° and 65°.

The baffles 20 may have an axial length L between 10% and 100% of an axial length L' of the annular cavity 13, which is defined by an axial distance between the annular walls 15 of the annular cavity 13.

The baffles 20 may be oriented to form an impinging angle between 90°±45° with a direction of the cooling fluid flow F entering the annular cavity 13 through the cooling inlets 17. The impinging angle of a baffle 20 is defined as the angle between the direction of a cooling fluid flow F impinging on the baffle 20 at an impingement location and a plane tangent to the baffle 20 at the impingement location.

In the embodiment of figure 3, four baffles 20 are arranged symmetrically with respect to four corresponding cooling inlets 17 in the outer casing 10 and intercept substantially the whole cooling fluid flow F entering the cavity 13. The baffles 20 are oriented such that the cooling fluid flow F impinges on their convex surfaces. Moreover, impinging jets of cooling fluid are split by the respective baffles 20 into flow portions F1, F2 deflected in opposite circumferential directions. The baffles 20 may be oriented perpendicular to the respective cooling fluid flow F.

In the embodiment of figure 3, the baffles extend from one of the annular walls 13 to the other of the annular walls 13 of the annular cavity 13, i.e. across the whole axial length L' of the annular cavity 13. In this case, the baffles 20 are supported by both the annular walls 15. The baffles 20 are rigidly connected to the annular walls 15, e.g. by welding or bolting. The baffles 20 may also be integral with one of the annular walls 15.

Direct impingement of the cooling fluid flow F on the inner casing 11 is prevented by the baffles 20. The cooling fluid impinges on the baffles 20 and is deflected substantially circumferentially. Pressure gradients, vortices at the edges of the baffle 20 and interaction of portions of cooling fluid deflected by adjacent baffles 20 in opposite directions cause the radial speed component of the cooling fluid flow F to drop and the cooling fluid to be directed also in the space between the baffles 20 and the inner casing 11, thus providing uniform cooling effect also in this regions.

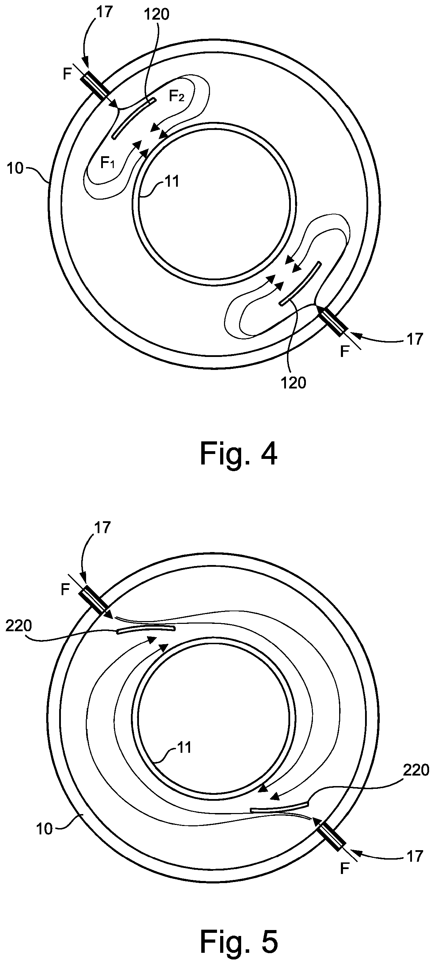

In one embodiment (figure 4), two baffles, here indicated by reference numeral 120, are present for as many supply pipes 9 and cooling inlets 17. The configuration, location and orientation of each one of the baffles 120 is substantially the same already described and in any case within the ranges indicated for radial position, circumferential size and impingement angle.

In one embodiment, illustrated in figure 5, baffles 220 are arranged to deflect the whole entering cooling fluid flow F in a common circumferential direction (clockwise in figure 5). In this case, the baffles 220 may form an impinging angle close to 135°, e.g. between 125° and 135°, and are oriented to receive the impinging cooling fluid flow F on their convex surface.

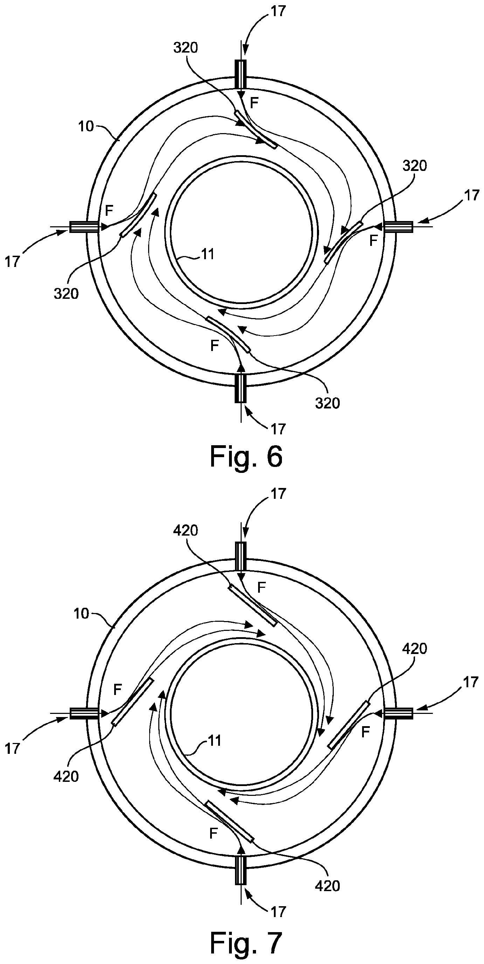

Also in the embodiment shown in figure 6, baffles 320 are arranged to deflect the whole entering cooling fluid flow F in a common circumferential direction. In this case, however, the baffles 320 are oriented to receive the respective cooling fluid flow F on their concave surface.

In another embodiment, shown in figure 7, baffles 420 may be in the form of flat plates arranged to deflect the whole cooling fluid flow F in a common circumferential direction.

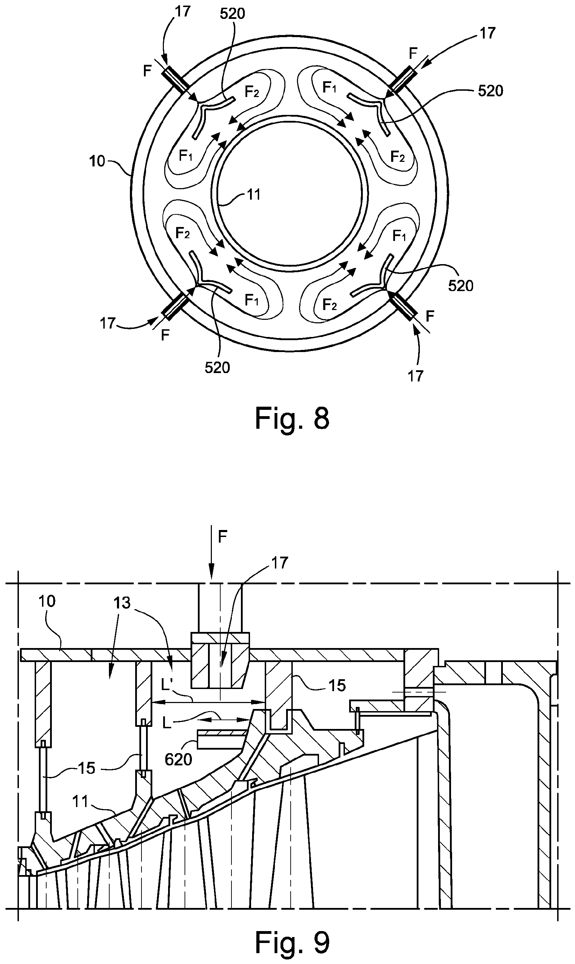

In the embodiment of figure 8, baffles 520 are cusp-shaped, with the cusp oriented toward the outer casing 10 in such a manner to split the respective impinging cooling fluid flows F.

Another embodiment of the invention is illustrated in figure 9. In this case, baffles 620 have an axial length L which is less than the axial length L' of the annular cavity 13. By way of example, the axial length L of the baffles 620 may be 30% to 50% of the axial length L' of the annular cavity 13. The baffles 620 are supported by just one of the annular walls 13 that delimit the annular cavity 13 and intercept only a portion of the cooling fluid flow F coming from the respective cooling inlet 17.

Finally, it is evident that the described transition duct may be subject to modifications and variations, without departing from the scope of the present invention, as defined in the appended claims.

## Claims

1. A gas turbine comprising:
a compressor section (2) and a turbine section (5) extending along an axis (A);
an outer casing (10) and an inner casing (11), delimiting an annular cavity (13) between one another in the turbine section (5);
a cooling circuit (7), configured to direct a cooling fluid flow (F) from the compressor section (2) to the annular cavity (13) of the turbine section (5) through cooling inlets (17) in the outer casing (10); and
baffles (20; 120; 220; 320; 420; 520; 620) arranged in the annular cavity (13) between respective cooling inlets (17) and the inner casing (11) and configured to intercept at least part of the cooling fluid flow (F) fed through the respective cooling inlets (17) and to prevent the intercepted cooling fluid flow (F) from directly impinging on the inner casing (11), **characterized in that** said baffles (20; 120; 220; 320; 420; 520; 620) are in the form of plates extending in a circumferential direction around the inner casing (11) over an angle (α) between 15° and 65°.

2. The gas turbine according to claim 1, wherein each baffle (20; 120; 220; 320; 420; 520; 620) is separated from the inner casing (11) by a free space.

3. The gas turbine according to claim 1 or 2, wherein the annular cavity (13) has a height (H) defined by a radial distance between the outer casing (10) and the inner casing (11) and the baffles (20; 120; 220; 320; 420; 520; 620) are located between 20% and 80% of the height (H) of the annular cavity (13).

4. The gas turbine according to any one of the preceding claims, wherein the annular cavity (13) has a first axial length (L') and the baffles (20; 120; 220; 320; 420; 520; 620) have a second axial length (L) which is between 10% and 100% of the first axial length (L').

5. The gas turbine according to any one of the preceding claims, wherein the baffles (220; 320; 420; 620) are oriented to form an angle (β) between 90°±45° with a direction of the cooling fluid flow (F) entering the annular cavity (13) through the cooling inlets (17).

6. The gas turbine according to any one of the preceding claims, wherein the baffles (20; 120; 220; 320; 420; 520; 620) are arranged symmetrically with respect to the respective cooling inlet (17) in the outer casing (10).

7. The gas turbine according to any one of the preceding claims, wherein the baffles (20; 120; 520; 620) are arranged to split respective impinging jets of cooling fluid into flow portions (F1, F2) deflected in opposite circumferential directions.

8. The gas turbine according to any one of the preceding claims, wherein the baffles (220; 320; 420) are arranged to deflect the whole cooling fluid flow (F) in a common circumferential direction.

9. The gas turbine according to any one of the preceding claims, wherein the baffles (20; 120; 220; 320; 420) are in the form of curved plates having a curvature in a plane perpendicular to the axis (A) and having each a convex surface and a concave surface.

10. The gas turbine according to claim 9, wherein the baffles (20; 120; 220; 620) are oriented such that the cooling fluid flow (F) impinges on the convex surfaces of the baffles (20).

11. The gas turbine according to claim 9, wherein the baffles (20) are oriented such that the cooling fluid flow (F) impinges on the concave surfaces of the baffles (320).

12. The gas turbine according to any one of claims 1 to 7, wherein the baffles are in the form of flat plates (420) or cusp-shaped plates (520), with the cusp oriented toward the outer casing (10).

13. The gas turbine according to any one of the preceding claims, wherein the annular cavity (13) is axially delimited by annular walls (15) and the baffles (20) are supported by at least one of the annular walls.

14. The gas turbine according to claim 13, wherein the baffles (20) extend from one of the annular walls (15) to the other of the annular walls (15) and is supported by both the annular walls (15).

## Patentansprüche

1. Gasturbine, enthaltend:
einen Verdichterabschnitt (2) und einen Turbinenabschnitt (5), die sich entlang einer Achse (A) erstrecken;
ein äußeres Gehäuse (10) und ein inneres Gehäuse (11), die zwischen sich einen ringförmigen Hohlraum (13) in dem Turbinenabschnitt (5) begrenzen;
einen Kühlkreislauf (7), der dafür konfiguriert ist, einen Kühlfluidstrom (F) von dem Verdichterabschnitt (2) zu dem ringförmigen Hohlraum (13) des Turbinenabschnitts (5) durch Kühleinlässe (17) in dem äußeren Gehäuse (10) zu leiten; und
Leitbleche (20; 120; 220; 320; 420; 520; 620), die in dem ringförmigen Hohlraum (13) zwischen jeweiligen Kühleinlässen (17) und dem inneren Gehäuse (11) angeordnet sind und dafür konfiguriert sind, mindestens einen Teil des durch die jeweiligen Kühleinlässe (17) zugeführten Kühlfluidstroms (F) abzufangen und zu verhindern, dass der abgefangene Kühlfluidstrom (F) direkt auf das innere Gehäuse (11) auftrifft, **dadurch gekennzeichnet, dass** die Leitbleche (20; 120; 220; 320; 420; 520; 620) in Form von Platten sind, die sich in einer Umfangsrichtung um das innere Gehäuse (11) über einen Winkel (α) zwischen 15° und 65° erstrecken.

2. Gasturbine nach Anspruch 1, wobei jedes Leitblech (20; 120; 220; 320; 420; 520; 620) von dem inneren Gehäuse (11) durch einen freien Raum getrennt ist.

3. Gasturbine nach Anspruch 1 oder 2, wobei der ringförmige Hohlraum (13) eine Höhe (H) hat, die durch einen radialen Abstand zwischen dem äußeren Gehäuse (10) und dem inneren Gehäuse (11) definiert ist, und die Leitbleche (20; 120; 220; 320; 420; 520; 620) zwischen 20 % und 80 % der Höhe (H) des ringförmigen Hohlraums (13) angeordnet sind.

4. Gasturbine nach einem der vorhergehenden Ansprüche, wobei der ringförmige Hohlraum (13) eine erste axiale Länge (L') hat und die Leitbleche (20; 120; 220; 320; 420; 520; 620) eine zweite axiale Länge (L) haben, die zwischen 10 % und 100 % der ersten axialen Länge (L') liegt.

5. Gasturbine nach einem der vorhergehenden Ansprüche, wobei die Leitbleche (220; 320; 420; 620) so ausgerichtet sind, dass sie einen Winkel (β) zwischen 90°±45° mit einer Richtung des durch die Kühleinlässe (17) in den ringförmigen Hohlraum (13) eintretenden Kühlfluidflusses (F) bilden.

6. Gasturbine nach einem der vorhergehenden Ansprüche, wobei die Leitbleche (20; 120; 220; 320; 420; 520; 620) in Bezug auf den jeweiligen Kühleinlass (17) in dem äußeren Gehäuse (10) symmetrisch angeordnet sind.

7. Gasturbine nach einem der vorhergehenden Ansprüche, wobei die Leitbleche (20; 120; 520; 620) so angeordnet sind, dass sie jeweilige auftreffende Strahlen des Kühlfluids in Flussteile (F1, F2) teilen, die in entgegengesetzte Umfangsrichtungen abgelenkt sind.

8. Gasturbine nach einem der vorhergehenden Ansprüche, wobei die Leitbleche (220; 320; 420) so angeordnet sind, dass sie den gesamten Kühlfluidfluss (F) in eine gemeinsame Umfangsrichtung ablenken.

9. Gasturbine nach einem der vorhergehenden Ansprüche, wobei die Leitbleche (20; 120; 220; 320; 420) in Form von gekrümmten Platten sind, die eine Krümmung in einer zu der Achse (A) senkrechten Ebene haben und jeweils eine konvexe Oberfläche und eine konkave Oberfläche haben.

10. Gasturbine nach Anspruch 9, wobei die Leitbleche (20; 120; 220; 620) so ausgerichtet sind, dass der Kühlfluidfluss (F) auf die konvexen Oberflächen der Leitbleche (20) auftrifft.

11. Gasturbine nach Anspruch 9, wobei die Leitbleche (20) so ausgerichtet sind, dass der Kühlfluidfluss (F) auf die konkaven Oberflächen der Leitbleche (320) auftrifft.

12. Gasturbine nach einem der Ansprüche 1 bis 7, wobei die Leitbleche in Form von flachen Platten (420) oder scheitelförmigen Platten (520) sind, wobei der Scheitel zu dem äußeren Gehäuse (10) hin gerichtet ist.

13. Gasturbine nach einem der vorhergehenden Ansprüche, wobei der ringförmige Hohlraum (13) durch ringförmige Wände (15) axial begrenzt ist und die Leitbleche (20) durch mindestens eine der ringförmigen Wände gehalten werden.

14. Gasturbine nach Anspruch 13, wobei die Leitbleche (20) sich von einer der ringförmigen Wände (15) zu der anderen der ringförmigen Wände (15) erstrecken und von beiden ringförmigen Wänden (15) gehalten werden.

## Revendications

1. Turbine à gaz comprenant :
une section de compresseur (2) et une section de turbine (5) s'étendant le long d'un axe (A) ;
un carter externe (10) et un carter interne (11), délimitant une cavité annulaire (13) entre eux dans la section de turbine (5) ;
un circuit de refroidissement (7) configuré pour diriger un écoulement de fluide de refroidissement (F) de la section de compresseur (2) à la cavité annulaire (13) de la section de turbine (5) à travers des entrées de refroidissement (17) dans le carter externe (10) ; et
des déflecteurs (20; 120 ; 220 ; 320 ; 420 ; 520 ; 620) agencés dans la cavité annulaire (13) entre des entrées de refroidissement (17) respectives et le carter interne (11) et configurés pour intercepter au moins une partie de l'écoulement de fluide de refroidissement (F) alimenté par les entrées de refroidissement (17) respectives et pour empêcher l'écoulement de fluide de refroidissement intercepté (F) d'empiéter directement sur le carter interne (11), **caractérisé en ce que** lesdits déflecteurs (20 ; 120 ; 220 ; 320 ; 420 ; 520 ; 620) se présentent sous la forme de plaques s'étendant dans une direction circonférentielle autour du carter interne (11) sur un angle (α) compris entre 15° et 65°.

2. Turbine à gaz selon la revendication 1, dans laquelle chaque déflecteur (20 ; 120 ; 220 ; 320 ; 420 ; 520 ; 620) est séparé du carter interne (11) par un espace libre.

3. Turbine à gaz selon la revendication 1 ou 2, dans laquelle la cavité annulaire (13) a une hauteur (H) définie par une distance radiale entre le carter externe (10) et le carter interne (11) et les déflecteurs (20 ; 120 ; 220 ; 320 ; 420 ; 520 ; 620) sont positionnés entre 20% et 80% de la hauteur (H) de la cavité annulaire (13).

4. Turbine à gaz selon l'une quelconque des revendications précédentes, dans laquelle la cavité annulaire (13) a une première longueur axiale (L') et les déflecteurs (20 ; 120 ; 220 ; 320 ; 420 ; 520 ; 620) ont une seconde longueur axiale (L) qui est comprise entre 10% et 100% de la première longueur axiale (L').

5. Turbine à gaz selon l'une quelconque des revendications précédentes, dans laquelle les déflecteurs (220 ; 320 ; 420 ; 620) sont orientés afin de former un angle (β) compris entre 90° ± 45° avec une direction de l'écoulement de fluide de refroidissement (F) qui entre dans la cavité annulaire (13) par le biais des entrées de refroidissement (17).

6. Turbine à gaz selon l'une quelconque des revendications précédentes, dans laquelle les déflecteurs (20; 120; 220; 320; 420; 520; 620) sont agencés symétriquement par rapport à l'entrée de refroidissement (17) respective dans le carter externe (10).

7. Turbine à gaz selon l'une quelconque des revendications précédentes, dans laquelle les déflecteurs (20; 120; 520; 620) sont agencés pour partager des jets d'empiétement respectifs de fluide de refroidissement en parties d'écoulement (F1, F2) déviées dans des directions circonférentielles opposées.

8. Turbine à gaz selon l'une quelconque des revendications précédentes, dans laquelle les déflecteurs (220 ; 320 ; 420) sont agencés pour dévier la totalité de l'écoulement de fluide de refroidissement (F) dans une direction circonférentielle commune.

9. Turbine à gaz selon l'une quelconque des revendications précédentes, dans laquelle les déflecteurs (20 ; 120 ; 220 ; 320 ; 420) se présentent sous la forme de plaques incurvées ayant une courbure dans un plan perpendiculaire à l'axe (A) et ayant chacun une surface convexe et une surface concave.

10. Turbine à gaz selon la revendication 9, dans laquelle les déflecteurs (20 ; 120 ; 220 ; 620) sont orientés de sorte que l'écoulement de fluide de refroidissement (F) entre en collision sur les surfaces convexes des déflecteurs (20).

11. Turbine à gaz selon la revendication 9, dans laquelle les déflecteurs (20) sont orientés de sorte que l'écoulement de fluide de refroidissement (F) empiète sur les surfaces concaves des déflecteurs (320).

12. Turbine à gaz selon l'une quelconque des revendications 1 à 7, dans laquelle les déflecteurs se présentent sous la forme de plaques plates (420) ou de plaques en forme de cuspide (520), avec la cuspide orientée vers le carter externe (10).

13. Turbine à gaz selon l'une quelconque des revendications précédentes, dans laquelle la cavité annulaire (13) est axialement délimitée par des parois annulaires (15) et les déflecteurs (20) sont supportés par au moins l'une des parois annulaires.

14. Turbine à gaz selon la revendication 13, dans laquelle les déflecteurs (20) s'étendent à partir de l'une des parois annulaires (15) jusqu'aux autres des parois annulaires (15) et sont supportés par les deux parois annulaires (15).
